(19) Europäisches Patentamt / European Patent Office / Office européen des brevets

(11) **EP 4 542 668 A1**

(12) **EUROPEAN PATENT APPLICATION**
published in accordance with Art. 153(4) EPC

(43) Date of publication:
**23.04.2025 Bulletin 2025/17**

(21) Application number: **23907852.0**

(22) Date of filing: **22.12.2023**

(51) International Patent Classification (IPC):
$H01M\ 4/13$ (2010.01)   $H01M\ 4/04$ (2006.01)
$H01M\ 4/139$ (2010.01)   $H01M\ 10/0525$ (2010.01)
$H01M\ 4/02$ (2006.01)

(52) Cooperative Patent Classification (CPC):
H01M 4/02; H01M 4/04; H01M 4/13; H01M 4/139;
H01M 10/0525

(86) International application number:
**PCT/KR2023/021383**

(87) International publication number:
**WO 2024/136569 (27.06.2024 Gazette 2024/26)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **23.12.2022 KR 20220182508**

(71) Applicant: **LG Energy Solution, Ltd.**
**Seoul 07335 (KR)**

(72) Inventors:
• **JOO, Mun Kyu**
**Daejeon 34122 (KR)**
• **LEE, Ilha**
**Daejeon 34122 (KR)**
• **KOO, Daeryung**
**Daejeon 34122 (KR)**
• **KWON, Yohan**
**Daejeon 34122 (KR)**
• **CHAE, Jonghyun**
**Daejeon 34122 (KR)**
• **CHOI, Seong Won**
**Daejeon 34122 (KR)**

(74) Representative: **Hoffmann Eitle**
**Patent- und Rechtsanwälte PartmbB**
**Arabellastraße 30**
**81925 München (DE)**

(54) **TRANSFER LAMINATE, METHOD FOR MANUFACTURING ANODE FOR LITHIUM SECONDARY BATTERY, ANODE FOR LITHIUM SECONDARY BATTERY, AND LITHIUM SECONDARY BATTERY COMPRISING ANODE**

(57)   The present application relates to a transfer laminate, a method for manufacturing a negative electrode for a lithium secondary battery, a negative electrode for a lithium secondary battery, and a lithium secondary battery. The transfer laminate comprises a base material layer, and a lithium metal layer on one surface of the base material layer, wherein the lithium metal layer comprises a surface protection film on a surface of the lithium metal layer, wherein the surface protection film comprises lithium carbonate ($Li_2CO_3$), and wherein a surface color difference with respect to the surface of the lithium metal layer comprising the surface protection film satisfies following

$$L_{SCE} \geq 40 - \text{Formula (1)}$$

in Formula (1) above, $L_{SCE}$ refers to a brightness index measured in a specular component excluded (SCE) mode.

[Figure 1]

**Description**

[Technical Field]

The present application relates to a transfer laminate, a method for manufacturing a negative electrode for a lithium secondary battery, a negative electrode for a lithium secondary battery, and a lithium secondary battery including a negative electrode.

This application claims priority to and the benefit of Korean Patent Application No. 10-2022-0182508 filed in the Korean Intellectual Property Office on December 23, 2022, the entire contents of which are incorporated herein by reference.

[Background Art]

Due to the rapid increase in the use of fossil fuels, the demand for the use of alternative energy or clean energy is increasing, and as part thereof, the fields that are being studied most actively are the fields of power generation and power storage using an electrochemical reaction.

At present, a secondary battery is a representative example of an electrochemical device that utilizes such electrochemical energy, and the range of use thereof tends to be gradually expanding.

Along with the technology development and the increase in demand for mobile devices, the demand for secondary batteries as an energy source is sharply increasing. Among such secondary batteries, lithium secondary batteries having high energy density and voltage, long cycle life, and low self-discharging rate have been commercialized and widely used. In addition, research is being actively conducted on a method for manufacturing a high-density electrode having a higher energy density per unit volume as an electrode for such a high-capacity lithium secondary battery.

In general, a secondary battery includes a positive electrode, a negative electrode, an electrolyte, and a separator. The negative electrode includes a negative electrode active material for intercalating and deintercalating lithium ions coming out from the positive electrode, and silicon-based particles having a high discharge capacity may be used as the negative electrode active material.

In general, a carbon material such as graphite is used for a negative electrode of a lithium secondary battery, but the theoretical capacity density of carbon is 372 mAh/g (833 mAh/cm$^3$). Therefore, in order to improve the energy density of the negative electrode, silicon (Si), tin (Sn), and oxides and alloys thereof, which are alloyed with lithium, are considered as negative electrode materials. Among them, silicon-based materials are attracting attention due to their low cost and high capacity (4200 mAh/g).

However, when a silicon-based negative electrode active material is used, a problem arises in that the initial irreversible capacity is large. That is, in the charging and discharging reaction of the lithium secondary battery, lithium discharged from the positive electrode is intercalated into the negative electrode during charging, and is deintercalated from the negative electrode to return to the positive electrode again during discharging. In the case of the silicon-based negative electrode active material, the volume change and the surface side reaction are severe, so that a large amount of lithium intercalated in the negative electrode during initial charging does not return to the positive electrode again, and thus an initial irreversible capacity increases. When the initial irreversible capacity increases, there occurs a problem that the battery capacity and the cycle are rapidly reduced.

In order to solve the above problems, known is a method for pre-lithiating a silicon negative electrode including a silicon-based negative electrode active material. As the pre-lithiation method, known methods include a method of manufacturing an electrode after lithiation by a physicochemical method such as electrolytic plating, lithium metal transfer, and lithium metal deposition, a method of electrochemically pre-lithiating a negative electrode, and the like.

In order to use the existing electrochemical method, the wet process should be performed within the electrolyte, which poses risks such as fire and explosion, so it was necessary to control an inert environment well. That is, when creating the environment, it is difficult to control conditions such as moisture control by using inert gas in a room where the electrochemical method is performed. In addition, in order to uniformly control the initial irreversible capacity, a rate of pre-lithiation should be slowed down as much as possible using an electrochemical method, so a problem arises in that the production cost increases in the application of the electrochemical method.

In addition, a problem arises in that heat is generated in a process in which lithium is intercalated into an electrode through a pressurization process during the pre-lithiation process. In particular, when a heat generation temperature of the electrode exceeds 30°C, lithium causes an oxidation reaction to promote side reactions, and there is also a risk of electrode ignition during the lithium transfer process. These risk factors are very important and should be managed when performing the lithium transfer process.

In order to address the heat generation phenomenon, appropriate surface treatment is performed on the transfer laminate. However, there is no measurement method that enables quantitative confirmation of a degree to which ignition stability and inhibition of lithium oxidation reaction are efficiently improved while allowing for easy transfer. Therefore, the surface treatment is not performed properly, so that heat generation occurs and oxidation of lithium is caused, leading to side reactions, or the risk of electrode ignition cannot be avoided during the lithium transfer process.

Therefore, there is a need for research on a criterion that enables quantification of surface treatment.

[Prior Art Document]

(Patent Literature 1) Japanese Patent Application Publication No. 2009-080971

[Detailed Description of the Invention]

[Technical Problem]

In order to solve the above-described problems, the present inventors confirmed that a degree of oxidation reaction of lithium on a surface can be quantified by defining a color difference of a surface of lithium metal, whereby the above problems can be solved.

Accordingly, the present application relates to a transfer laminate, a method for manufacturing a negative electrode for a lithium secondary battery, a negative electrode for a lithium secondary battery, and a lithium secondary battery including a negative electrode.

[Technical Solution]

An exemplary embodiment of the present specification is to provide a transfer laminate including a base material layer and a lithium metal layer on one surface of the base material layer, wherein the lithium metal layer includes a surface protection film on a surface of the lithium metal layer, wherein the surface protection film includes lithium carbonate $(Li_2CO_3)$, and wherein a surface color difference with respect to the surface of the lithium metal layer including the surface protection film satisfies following Formula (1):

$$L_{SCE} \geq 40 - \text{Formula (1)}$$

in Formula (1) above, $L_{SCE}$ refers to a brightness index measured in a specular component excluded (SCE) mode.

Another exemplary embodiment provides a method for manufacturing a negative electrode for a lithium secondary battery, the method including: forming a negative electrode for a lithium secondary battery by forming a negative electrode current collector layer and a negative electrode active material layer on one surface or both surfaces of the negative electrode current collector layer; and transferring a lithium metal layer by laminating the transfer laminate according to the present specification onto a surface of the negative electrode active material layer opposite to a surface in contact with the negative electrode current collector layer.

Additionally, an exemplary embodiment of the present specification is to provide a negative electrode for a lithium secondary battery manufactured by the method for manufacturing a negative electrode for a lithium secondary battery.

Furthermore, an exemplary embodiment of the present specification is to provide a lithium secondary battery including a first electrode; a second electrode; a separator provided between the first electrode and the second electrode; and an electrolyte, wherein one of the first electrode and the second electrode includes the negative electrode for a lithium secondary battery.

[Advantageous Effects]

The transfer laminate according to an exemplary embodiment of the present invention quantifies a degree of surface treatment as a color difference to define a characteristic that enables a transfer process to be performed efficiently, thereby allowing the progress of a surface treatment process to be easily figured out. By using the index of the surface treatment process, a quality issue and a stability issue that occur during the transfer process can be effectively reduced.

[Brief Description of Drawings]

FIG. 1 is a view showing a process of transferring lithium metal to a negative electrode for a lithium secondary battery according to an exemplary embodiment of the present specification.

FIG. 2 is a view showing a stack structure of a lithium secondary battery according to an exemplary embodiment of the present specification.

<Explanation of Reference Numerals and Symbols>

10:     base material layer
20:     lithium metal layer
30:     negative electrode active material layer
40:     negative electrode current collector layer
55:     separator
60:     positive electrode current collector layer
70:     positive electrode active material layer
100:    transfer laminate
200:    negative electrode for lithium secondary battery
300:    positive electrode for lithium secondary battery

[Best Mode]

Before describing the present invention, some terms are first defined.

When one part "includes", "comprises" or "has" one constituent element in the present specification, unless otherwise specifically described, this does not mean that another constituent element is excluded, but means that another constituent element may be further included.

In the present specification, 'p to q' means a range of 'p or more and q or less'.

In the present specification, the "specific surface area" is measured by the BET method, and specifically, is calculated from a nitrogen gas adsorption amount at a liquid nitrogen temperature (77K) by using BELSORP-mini II available from BEL Japan, Inc. That is, in the present application, the BET specific surface area may refer to the specific surface area measured by the above measurement method.

In the present specification, "Dn" means an average particle diameter, and means a particle diameter at the n% point in the cumulative distribution of the number of particles according to the particle diameter. That is, D50 is a particle diameter at the 50% point in the cumulative distribution of the number of particles according to the particle diameter, D90 is a particle diameter at the 90% point in the cumulative distribution of the number of particles according to the particle diameter, and D10 is a particle diameter at the 10% point in the cumulative distribution of the number of particles according to the particle diameter. Meanwhile, the average particle diameter may be measured using a laser diffraction method. Specifically, after powder to be measured is dispersed in a dispersion medium, the resultant dispersion is introduced into a commercially available laser diffraction particle size measurement apparatus (for example, Microtrac S3500) in which a difference in a diffraction pattern according to the particle size is measured, when a laser beam passes through particles, and then a particle size distribution is calculated.

Hereinafter, embodiments of the present invention will be described in detail with reference to the drawings so that one skilled in the art can readily implement the present invention. However, the present invention may be embodied in various different forms, and is not limited to the following descriptions.

**<Transfer Laminate>**

An exemplary embodiment of the present specification provides a transfer laminate including a base material layer and a lithium metal layer on one surface of the base material layer, wherein the lithium metal layer includes a surface protection film on a surface of the lithium metal layer, wherein the surface protection film includes lithium carbonate ($Li_2CO_3$), and wherein a surface color difference with respect to the surface of the lithium metal layer including the surface protection film satisfies following Formula (1):

$$L_{SCE} \geq 40 - \text{Formula (1)}$$

in Formula (1) above, $L_{SCE}$ refers to a brightness index measured in a specular component excluded (SCE, specularly reflected light excluded) mode.

In another exemplary embodiment of the present specification, in the surface color difference with respect to the surface of the lithium metal layer including the surface protection film, $L_{SCE}$ may have a value of about 40 or greater, preferably about 41 or greater, and more preferably about 42 or greater, and about 100 or less, about 95 or less, about 90 or less, preferably 85 or less, or more preferably about 83 or less.

In the present specification, the surface color difference can be measured using equipment known in the art, and specifically, CM-2600d available from Konica Minolta can be used.

According to the above exemplary embodiment, the hardness of the surface of the lithium metal layer including the surface protection film can be figured out by defining the surface color difference as a brightness index measured in the SCE mode that defines the brightness with respect to reflected light (mainly, scattered light) excluding specularly reflected light.

The transfer laminate according to the above exemplary embodiment can suppress ignition or side reactions due to heat generation by having a surface color difference within a specific range.

In the present specification, conditions for measuring the surface color difference of the lithium metal layer may include using a D65 standard light source, a field of view of 10°, and 100% UV.

In the present specification, surface treatment may be performed using carbon dioxide ($CO_2$), but is not limited thereto. For example, the surface treatment may be performed using a single gas of carbon dioxide ($CO_2$), or a mixed gas of carbon dioxide and inert gas (for example, nitrogen ($N_2$), argon (Ar), or the like).

In the present specification, a mixed gas of inert gas (for example, argon) and carbon dioxide may be used, and a mixing ratio of argon and carbon dioxide may be 8:2, but is not limited thereto.

In the present specification, when the surface treatment is performed with a single gas of carbon dioxide ($CO_2$), lithium carbonate ($Li_2CO_3$) that is a lithium oxide may be included as a main component on the surface of the lithium metal layer.

In the transfer laminate according to the above exemplary embodiment, the color difference is defined with respect to the surface of the lithium metal layer including lithium carbonate, which is a lithium oxide, so that a surface treatment state that can improve stability in the future lithium transfer process can be numerically figured out.

In an exemplary embodiment of the present specification, one or more components selected from LiOH, $Li_3N$, $Li_2O$, $Li_2O_2$ and a combination thereof may be further included on the surface of the lithium metal layer.

In the present specification, in the surface treatment process, when the lithium metal layer is surface treated by exposure to oxygen, nitrogen, moisture, or the like in the atmosphere, lithium oxide (for example, $Li_2O$, $Li_2O_2$), lithium nitride ($Li_3N$), lithium hydroxide (LiOH), or the like may be further included as an additional component on the surface of the lithium metal layer.

In an exemplary embodiment of the present specification, there is provided the transfer laminate in which the surface color difference with respect to the surface of the lithium metal layer including the surface protection film satisfies following Formula (2):

$$L_{SCI} \geq 90 \quad - \quad \text{Formula (2)}$$

in Formula (2) above, $L_{SCI}$ refers to a brightness index measured in a specular component included (SCI, specularly reflected light included) mode.

In another exemplary embodiment of the present specification, in the surface color difference with respect to the surface of the lithium metal layer including the surface protection film, $L_{SCI}$ may have a value of about 80 or greater, preferably about 85 or greater, and more preferably about 90 or greater, and about 100 or less, and preferably about 98 or less, and more preferably about 96 or less.

In the transfer laminate according to the above exemplary embodiment, the color difference is defined with respect to the surface of the lithium metal layer including lithium carbonate, which is a lithium oxide, so that a surface treatment state that can improve stability in the future lithium transfer process can be numerically figured out.

In another exemplary embodiment of the present specification, the surface color difference with respect to the surface of the lithium metal layer including the surface protection film may satisfy both Formula (1) and Formula (2) above.

In the transfer laminate according to the above exemplary embodiment, the color difference is defined with respect to the surface of the lithium metal layer including lithium carbonate, which is a lithium oxide, so that a surface treatment state that can improve stability in the future lithium transfer process can be numerically figured out.

In the present specification, the surface color difference of the lithium metal layer can be measured using equipment known in the art, and specifically, CM-2600d available from Konica Minolta can be used.

In an exemplary embodiment of the present specification, a thickness of the base material layer may be 5 $\mu$m or greater and 300 $\mu$m or less, and preferably 10 $\mu$m or greater and 100 $\mu$m or less. If the thickness of the base material layer is less than 5 $\mu$m, process issues such as creasing and tearing may occur during the process, and if the thickness exceeds 300 $\mu$m, it is difficult to increase a deposition rate because it is difficult to effectively remove heat during lithium deposition, which may lead to an increase in costs and the like.

In an exemplary embodiment of the present specification, the base material layer may be one or more selected from the group consisting of polyethylene terephthalate (PET), polyethylenenaphtalate, (PEN), polyimide (PI), poly (methylmethacrylate) (PMMA), polypropylene, polyethylene and polycarbonate.

In an exemplary embodiment of the present specification, a thickness of the lithium metal layer may be 1 $\mu$m or greater and 10 $\mu$m or less.

In another exemplary embodiment of the present application, the thickness of the lithium metal layer may be

about 1 μm or greater, about 2 μm or greater, or about 3 μm or greater, and about 10 μm or less, about 9 μm or less, or about 8 μm or less.

The thickness of the lithium metal layer satisfies the above-described range, so that the transfer of the lithium metal to the negative electrode active material layer can occur efficiently, the reverse transfer can be prevented, and the negative electrode active material layer can be pre-lithiated to a desired extent.

In an exemplary embodiment of the present specification, a release layer may be further included between the base material layer and the lithium metal layer.

In the transfer laminate according to the above exemplary embodiment, the base material layer, the release layer (which may be referred to as a first release layer or a peeling layer), and the lithium metal layer are stacked in the corresponding order, where the release layer functions as a peeling layer for transferring lithium. The release layer makes it possible to prevent a reverse peeling problem that lithium metal is transferred to the base material layer during a winding process for transferring a deposited lithium metal layer to the negative electrode, and also makes it possible to easily separate the base material layer after transferring lithium metal onto the negative electrode active material layer.

In another exemplary embodiment of the present application, release layers may be formed on both surfaces of the base material layer.

The transfer laminate according to the above exemplary embodiment may further include, in addition to the first release layer interposed between the base material layer and the lithium metal layer, a second release layer (which may also be referred to as a non-peeling layer) on a surface of the base material layer opposite to a surface in contact with the first release layer.

The second release layer is an ancillary configuration used in order to reduce friction with a roll during a roll-to-roll process.

In the present specification, the release layer may include one or more species selected from the group consisting of silicon-modified polyester in which a silicon chain is graft-linked to a polyester main chain, an acrylic resin, Si, melamine, and fluorine.

In an exemplary embodiment of the present specification, the release layer may be formed by a coating method. For example, the coating method may be a method selected from the group consisting of dip coating, spray coating, spin coating, die coating, gravure coating, micro-gravure coating, comma coating, ink-jet coating, bar coating, wire-bar coating, and roll coating, but is not limited thereto. That is, various coating methods that can be used to form a coating layer in the art can be used.

In an exemplary embodiment of the present specification, a thickness of the release layer may be 0.1 μm or greater and 10 μm or less.

Preferably, the thickness of the release layer may be about 0.1 μm or greater, about 0.2 μm or greater, about 0.3 μm or greater, about 0.4 μm or greater, or about 0.5 μm or greater, or about 10 μm or less, about 9.9 μm or less, about 9.8 μm or less, about 9.7 μm or less, or about 9.6 μm or less.

The release layer is transferred on top of a negative electrode active material layer, together with the lithium metal layer in a lithium metal transfer process described below, and the coating uniformity of the release layer can be increased when the thickness of the release layer satisfies the above-described range. In addition, when the above-described thickness range is satisfied, a problem of increasing battery resistance is not caused.

**<Method For Manufacturing Negative Electrode For Lithium Secondary Battery>**

An exemplary embodiment of the present specification provides a method for manufacturing a negative electrode for a lithium secondary battery, the method including: preparing a negative electrode for a lithium secondary battery by forming a negative electrode current collector layer and a negative electrode active material layer on one surface or both surfaces of the negative electrode current collector layer; and transferring a lithium metal layer by laminating the transfer laminate described above onto a surface of the negative electrode active material layer opposite to a surface in contact with the negative electrode current collector layer.

In the present specification, the step of forming a negative electrode active material layer on one surface or both surfaces of a negative electrode current collector layer includes coating a negative electrode slurry including a negative electrode active material layer composition on one surface or both surfaces of the negative electrode current collector layer, and the negative electrode active material layer composition may include one or more selected from the group consisting of a silicon-based active material, a negative electrode conductive material, and a negative electrode binder.

In an exemplary embodiment of the present specification, the negative electrode slurry may include a negative electrode active material layer composition and a slurry solvent.

In an exemplary embodiment of the present specification, a solid content of the negative electrode slurry may satisfy a range of 5% or more and 40% or less.

In another exemplary embodiment, the solid content of the negative electrode slurry may satisfy a range of 5% or more and 40% or less, preferably 7% or more and 35% or less, and more preferably 10% or more and 30% or less.

The solid content of the negative electrode slurry may refer to a content of the negative electrode active material layer composition included in the negative electrode slurry, and may refer to a content of the negative electrode active material composition based on 100 parts by weight of the negative electrode slurry.

When the solid content of the negative electrode slurry satisfies the above range, the viscosity is appropriate during formation of the negative electrode active material layer, so that particle agglomeration of the negative electrode active material layer composition is minimized to efficiently form the negative electrode active material layer.

In an exemplary embodiment of the present specification, the slurry solvent is not limited thereto as long as it can dissolve the negative electrode active material layer composition, but specifically, acetone, distilled water or NMP may be used.

A negative electrode according to an exemplary embodiment of the present specification may be formed by coating and drying the negative electrode slurry on the negative electrode current collector layer.

Through the drying step, the slurry solvent in the negative electrode slurry may be dried, and then an electrode roll-pressing step may be further included.

In an exemplary embodiment of the present specification, the negative electrode current collector layer generally has a thickness of 1 $\mu$m to 100 $\mu$m. Such a negative electrode current collector layer is not particularly limited as long as it has high conductivity without causing a chemical change in the battery. For example, copper, stainless steel, aluminum, nickel, titanium, fired carbon, copper or stainless steel each surface-treated with carbon, nickel, titanium, silver, or the like, an aluminum-cadmium alloy, or the like may be used. In addition, the negative electrode current collector layer may have microscopic irregularities formed on a surface to enhance an adhesive force with the negative electrode active material, and may be used in various forms such as a film, a sheet, a foil, a net, a porous body, a foamed body, or a non-woven fabric body.

An exemplary embodiment of the present specification includes a negative electrode active material layer including a negative electrode active material layer composition and being formed on one surface or both surfaces of the negative electrode current collector layer.

In an exemplary embodiment of the present specification, the negative electrode active material layer composition may include a silicon-based active material; a negative electrode conductive material; and a negative electrode binder.

In an exemplary embodiment of the present specification, the silicon-based active material may include one or more selected from the group consisting of SiOx (x=0), SiOx (0<x<2), SiC, a metal impurity, and a Si alloy.

In an exemplary embodiment of the present specification, the silicon-based active material may include one or more selected from the group consisting of SiOx (x=0) and SiOx (0<x<2), and may include the SiOx (x=0) in an amount of 70 parts by weight or more based on 100 parts by weight of the silicon-based active material.

In another exemplary embodiment, SiOx (x=0) may be included in an amount of 70 parts by weight or more, preferably 80 parts by weight or more, and more preferably 90 parts by weight or more, and 100 parts by weight or less, preferably 99 parts by weight or less, and more preferably 95 parts by weight or less based on 100 parts by weight of the silicon-based active material.

In an exemplary embodiment of the present specification, for the silicon-based active material, pure silicon (Si) may be particularly used as the silicon-based active material. The use of pure silicon (Si) as the silicon-based active material may mean that, based on 100 parts by weight of the total silicon-based active material as described above, pure Si particles (SiOx (x=0)) not bonded to other particles or elements are included within the above range.

The capacity of the silicon-based active material is significantly higher than that of a graphite-based active material that is typically used, so that there have been more attempts to apply the same. However, the volume expansion rate of the silicon-based active material during charging/discharging is high, so that, for example, only a small amount thereof is mixed and used with a graphite-based active material. In addition, despite the above-described advantages, the initial irreversible capacity is large and the lifetime is reduced. In order to solve the problems, a pre-lithiation process of lithiating a negative electrode in advance is performed.

Therefore, according to the present invention, the main object of the present invention is to provide a transfer laminate enabling a lithium metal layer to be transferred more smoothly on top of a negative electrode active material layer in order to solve the above problems, while using only a silicon-based active material with a high content as a negative electrode active material in order to improve capacity performance.

Note that an average particle diameter (D50) of the silicon-based active material of the present invention may be 5 $\mu$m to 10 $\mu$m, specifically 5.5 $\mu$m to 8 $\mu$m, and more specifically 6 $\mu$m to 7 $\mu$m. When the average particle diameter is within the above range, a specific surface area of the particles is within a suitable range, so that a viscosity of a negative electrode slurry is formed within an appropriate range. Accordingly, the particles constituting the negative electrode slurry are smoothly dispersed. In addition, when the size of the silicon-based active material has a value equal to or greater than the lower limit value of the range, a contact area between the silicon particles and the conductive material is excellent due to the composite made of the conductive material and the binder in the negative electrode slurry, so that a possibility of sustaining the conductive network increases, resulting in an increase in the capacity retention rate. Note that, when the average particle diameter satisfies the above range, excessively large silicon particles are excluded, so that a surface of the negative electrode is formed smoothly. Accordingly, a current density nonuniformity phenomenon during charging and discharging can be prevented.

In an exemplary embodiment of the present specification, the silicon-based active material generally has a characteristic BET specific surface area. The BET specific surface area of the silicon-based active material is preferably 0.01 to 150.0 $m^2/g$, more preferably 0.1 to 100.0 $m^2/g$, particularly preferably 0.2 to 80.0 $m^2/g$, and most preferably 0.2 to 18.0 $m^2/g$. The BET specific surface area is measured in accordance with DIN 66131 (using nitrogen).

In an exemplary embodiment of the present specification, the silicon-based active material may be present, for example, in a crystalline or amorphous form, and is preferably not porous. The silicon particles are preferably spherical or fragment-shaped particles. Alternatively, but less preferably, the silicon particles may also have a fibrous structure or be present in the form of a silicon-containing film or coating.

In an exemplary embodiment of the present specification, the silicon-based active material may be included in an amount of 60 parts by weight or more based on 100 parts by weight of the negative electrode active material layer composition.

In another exemplary embodiment, the silicon-based active material may be included in an amount of 60 parts by weight or more, preferably 65 parts by weight or more, and more preferably 70 parts by weight or more, and 95 parts by weight or less, preferably 90 parts by weight or less, and more preferably 80 parts by weight or less based on 100 parts by weight of the negative electrode active material layer composition.

The negative electrode active material layer composition according to the present application uses a conductive material and a binder capable of controlling the volume expansion rate during charging and discharging even when the silicon-based active material having a significantly high capacity is used in the above range. Accordingly, even when the silicon-based active material is within the above range, the negative electrode active material layer composition does not degrade performance of the negative electrode and has excellent output characteristics in charging and discharging.

In the related art, it is general to use only graphite-based compounds as the negative electrode active material. However, in recent years, as the demand for high-capacity batteries is increasing, attempts to mix and use silicon-based compounds are increasing in order to increase capacity. However, the silicon-based compounds have limitations in that the volume rapidly expands during the charging/discharging, resulting in damage to the conductive path formed in the negative electrode active material layer to degrade the performance of the battery.

Accordingly, in an exemplary embodiment of the present specification, the negative electrode conductive material may include one or more selected from the group consisting of a point-like conductive material, a linear conductive material, and a planar conductive material.

In an exemplary embodiment of the present specification, the point-like conductive material refers to a conductive material that may be used so as to improve conductivity of the negative electrode and has conductivity without causing a chemical change. Specifically, the point-like conductive material may be one or more species selected from the group consisting of natural graphite, artificial graphite, carbon black, acetylene black, Ketjen black, channel black, furnace black, lamp black, thermal black, conductive fiber, fluorocarbon, aluminum powder, nickel powder, zinc oxide, potassium titanate, titanium oxide, and a polyphenylene derivative, and preferably may include carbon black in terms of high conductivity and excellent dispersibility.

In an exemplary embodiment of the present specification, the point-like conductive material may have a BET specific surface area of 40 $m^2/g$ or greater and 70 $m^2/g$ or less, preferably 45 $m^2/g$ or greater and 65 $m^2/g$ or less, and more preferably 50 $m^2/g$ or greater and 60 $m^2/g$ or less.

In an exemplary embodiment of the present specification, a particle diameter of the point-like conductive material may be 10 nm to 100 nm, preferably 20 nm to 90 nm, and more preferably 20 nm to 60 nm.

In an exemplary embodiment of the present specification, the conductive material may include a planar conductive material.

The planar conductive material can improve conductivity by increasing surface contact between silicon particles in the negative electrode and at the same time suppress the disconnection of the conductive path due to the volume expansion, and may be expressed as a plate-like conductive material or a bulk-type conductive material.

In an exemplary embodiment of the present specification, the planar conductive material may include at least one selected from the group consisting of plate-like graphite, graphene, graphene oxide, and graphite flake, and preferably may be plate-like graphite.

In an exemplary embodiment of the present specification, an average particle diameter (D50) of the planar conductive material may be 2 $\mu$m to 7 $\mu$m, specifically 3 $\mu$m to 6 $\mu$m, and more specifically 4 $\mu$m to 5 $\mu$m. When the above range is satisfied, the sufficient particle size results in easy dispersion without causing an excessive increase in viscosity of the negative electrode slurry. Therefore, the dispersion effect is excellent when dispersing using the same equipment and time.

In an exemplary embodiment of the present specification, there is provided the negative electrode composition in which the planar conductive material has D10 of 0.5 $\mu$m or greater and 1.5 $\mu$m or less, D50 of 2.5 $\mu$m or greater and 3.5 $\mu$m or less, and D90 of 7.0 $\mu$m or greater and 15.0 $\mu$m or less.

In an exemplary embodiment of the present specification, for the planar conductive material, a planar conductive material with a high specific surface area having a high BET specific surface area or a planar conductive material with a low specific surface area may be used.

In an exemplary embodiment of the present application, for the planar conductive material, a planar conductive material with a high specific surface area or a planar conductive material with a low specific surface area may be used without limitation. However, in particular, the planar conductive material according to the present application can be affected to some extent in the electrode performance by the dispersion effect, so that a planar conductive material with a low specific surface area that does not cause a problem in dispersion is used particularly preferably.

In an exemplary embodiment of the present specification, the planar conductive material may have a BET specific surface area of 5 $m^2$/g or greater.

In another exemplary embodiment, the planar conductive material may have a BET specific surface area of 5 $m^2$/g or greater and 500 $m^2$/g or less, preferably 5 $m^2$/g or greater and 300 $m^2$/g or less, and more preferably 5 $m^2$/g or greater and 250 $m^2$/g or less.

In another exemplary embodiment, the planar conductive material is a planar conductive material with a high specific surface area, and the BET specific surface area may satisfy a range of 50 $m^2$/g or greater and 500 $m^2$/g or less, preferably 80 $m^2$/g or greater and 300 $m^2$/g or less, and more preferably 100 $m^2$/g or greater and 300 $m^2$/g or less.

In another exemplary embodiment, the planar conductive material is a planar conductive material with a low specific surface area, and the BET specific surface area may satisfy a range of 5 $m^2$/g or greater and 40 $m^2$/g or less, preferably 5 $m^2$/g or greater and 30 $m^2$/g or less, and more preferably 5 $m^2$/g or greater and 25 $m^2$/g or less.

Other conductive materials may include linear conductive materials such as carbon nanotubes. The carbon nanotubes may be bundle-type carbon nanotubes. The bundle-type carbon nanotubes may include a plurality of carbon nanotube units. Specifically, the term 'bundle type' herein refers to, unless otherwise specified, a bundle or rope-shaped secondary shape in which a plurality of carbon nanotube units are aligned side by side in such an orientation that longitudinal axes of the carbon nanotube units are substantially the same, or are entangled. The carbon nanotube unit has a graphite sheet having a cylindrical shape with a nano-sized diameter, and has an $sp^2$ bonding structure. In this case, the characteristics of a conductor or a semiconductor may be exhibited depending on the rolled angle and structure of the graphite sheet. As compared with entangled-type carbon nanotubes, the bundle-type carbon nanotubes can be more uniformly dispersed during the manufacture of the negative electrode, and can form more smoothly a conductive network in the negative electrode to improve the conductivity of the negative electrode.

In an exemplary embodiment of the present specification, the negative electrode conductive material may be included in an amount of 10 parts by weight or more and 40 parts by weight or less based on 100 parts by weight of the negative electrode active material layer composition.

In another exemplary embodiment, the negative electrode conductive material may be included in an amount of 10 parts by weight or more and 40 parts by weight or less, preferably 10 parts by weight or more and 30 parts by weight or less, and more preferably 10 parts by weight or more and 20 parts by weight or less, on the basis of 100 parts by weight of the negative electrode active material layer composition.

The negative electrode conductive material according to the present application has a completely different configuration from a conductive material that is applied to the positive electrode. That is, the negative electrode conductive material according to the present application serves to hold the contact between silicon-based active materials whose volume expansion of the electrode is very large due to charging and discharging, and the positive electrode conductive material serves to impart some conductivity while serving as a buffer when roll-pressed, and is completely different from the negative electrode conductive material of the present invention in terms of configuration and role.

In addition, the negative electrode conductive material according to the present application is applied to a silicon-based active material, and has a completely different configuration from that of a conductive material that is applied to a graphite-based active material. That is, since a conductive material that is used for an electrode having a graphite-based active material simply has smaller particles than the active material, the conductive material has characteristics of improving output characteristics and imparting some conductivity, and is completely different from the negative electrode conductive material that is applied together with the silicon-based active material as in the present invention, in terms of configuration and role.

In an exemplary embodiment of the present specification, the planar conductive material that is used as the negative electrode conductive material described above has a different structure and a role from those of the carbon-based active material that is generally used as the negative electrode active material. Specifically, the carbon-based active material that is used as the negative electrode active material may be artificial graphite or natural graphite, and refers to a material that is processed into a spherical or point-like shape and used so as to facilitate storage and release of lithium ions.

On the other hand, the planar conductive material that is used as the negative electrode conductive material is a material having a planar or plate-like shape, and may be expressed as plate-like graphite. That is, the plate-like conductive material is a material that is included in order to maintain a conductive path in the negative electrode active material layer, and refers to a material for securing a conductive path in a planar shape inside the negative electrode active material layer, rather than playing a role in storing and releasing lithium.

That is, in the present application, the use of plate-like graphite as a conductive material means that graphite is processed into a planar or plate-like shape and used as a material for securing a conductive path rather than playing a role in storing or releasing lithium. In this case, the negative electrode active material included together has high-capacity characteristics with respect to storing and releasing lithium, and serves to store and release all lithium ions transferred from the positive electrode.

On the other hand, in the present application, the use of a carbon-based active material as an active material means that the carbon-based active material is processed into a point-like or spherical shape and used as a material for storing or releasing lithium.

That is, in an exemplary embodiment of the present specification, artificial graphite or natural graphite, which is a carbon-based active material, may have a BET specific surface area that satisfies a range of 0.1 $m^2$/g or greater and 4.5 $m^2$/g or less. In addition, plate-like graphite, which is a planar conductive material, has a planar shape, and a BET specific surface area thereof may be 5 $m^2$/g or greater.

In an exemplary embodiment of the present specification, the negative electrode binder may include at least one selected from the group consisting of polyvinylidenefluoride-hexafluoropropylene copolymer (PVDF-co-HFP), polyvinylidenefluoride, polyacrylonitrile, polymethylmethacrylate, polyvinyl alcohol, carboxymethylcellulose (CMC), starch, hydroxypropylcellulose, regenerated cellulose, polyvinylpyrrolidone, polytetrafluoroethylene, polyethylene, polypropylene, polyacrylic acid, ethylene-propylene-diene monomer (EPDM), sulfonated EPDM, styrene butadiene rubber (SBR), fluoro rubber, poly acrylic acid, and the above-mentioned materials in which hydrogen is substituted with Li, Na, Ca, or the like, and may also include various copolymers thereof.

The negative electrode binder according to an exemplary embodiment of the present specification serves to hold the active material and the conductive material in order to prevent distortion and structural deformation of the negative electrode structure during volume expansion and relaxation of the silicon-based active material. When such roles are satisfied, all of the general binders can be applied. Specifically, an aqueous binder may be used, and more specifically, a PAM-based binder may be used.

In an exemplary embodiment of the present application, there is provided the method for manufacturing a negative electrode for a lithium secondary battery in which the step of transferring the lithium metal layer by laminating the transfer laminate onto a surface of the negative electrode active material layer opposite to a surface in contact with the negative electrode current collector layer includes laminating the transfer laminate such that a surface of the lithium metal layer opposite to a surface in contact with the base material layer comes into contact with a surface of the negative electrode active material layer opposite to a surface in contact with the negative electrode current collector layer, and removing the base material layer.

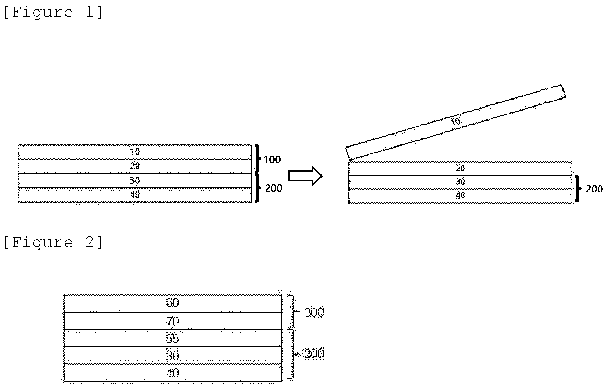

FIG. 1 shows a manufacturing method of a negative electrode for a lithium secondary battery according to an exemplary embodiment of the present specification. Specifically, a process of preparing a transfer laminate 100 including a base material layer 10 and a lithium metal layer 20, laminating the transfer laminate such that the lithium metal layer 20 comes into contact with a negative electrode active material layer 30 of a negative electrode 200 for a lithium secondary battery, in which the negative electrode active material layer 30 is formed on a negative electrode current collector layer 40, and then removing the base material layer 10 to transfer only the lithium metal layer 20 on top of the negative electrode active material layer 30 is shown.

In particular, as described above, the step of transferring the lithium metal layer via the transfer laminate including the specific base material layer according to the present application is included, so that the lithium metal layer can be more easily transferred.

In an exemplary embodiment of the present specification, there is provided the method for manufacturing a negative electrode for a lithium secondary battery in which the laminating is performed with a load of 200 kgf.

The lamination may proceed with a transfer process through roll pressing. Thereafter, a process of removing the base material layer is included. Upon removal, as the release layer according to the present application is included, direct contact between the lithium metal layer and the air can be prevented to protect the lithium metal layer. In addition, since the release layer is provided, the base material layer can be easily removed even with a weak linear pressure, so the rate of pre-lithiation can be easily regulated. Also, the base material layer is removed, so that the heat generated during pre-lithiation can be easily dissipated, thereby suppressing by-product generation.

In the present specification, after transferring the lithium metal layer, a step of pre-lithiating the negative electrode active material layer may be further included. In this case, the pre-lithiating may be performed simultaneously while transferring the lithium metal layer on top of the negative electrode active material layer, and it can be confirmed that, when the lithium metal layer is completely removed as seen with naked eyes, the pre-lithiation has been completed.

In an exemplary embodiment of the present specification, there is provided the method for manufacturing a negative electrode for a lithium secondary battery in which a step of pre-lithiating the negative electrode active material layer is further included after transferring the lithium metal layer, and in which in the step of pre-lithiating the negative electrode active material layer, the negative electrode active material layer is pre-lithiated within 30 minutes to 48 hours after transferring the lithium metal.

As described above, the base material layer can be removed immediately after the lithium metal layer is transferred, and the removal of the base material layer is easily performed, so that heat is easily dissipated during pre-lithiation in which the lithium metal layer and the negative electrode active material layer react, resulting in little by-product generation and uniform pre-lithiation in the negative electrode active material layer.

The pre-lithiation completion time may be calculated by measuring a period of time from the time of transferring the lithium metal to a time at which the transferred lithium metal is not observed on the surface of the negative electrode active material layer.

## <Negative Electrode For Lithium Secondary Battery>

An exemplary embodiment of the present specification provides a negative electrode for a lithium secondary battery manufactured by the method for manufacturing a negative electrode for a lithium secondary battery. The aforementioned description may be applied to the negative electrode of the present exemplary embodiment.

## <Lithium Secondary Battery>

An exemplary embodiment of the present specification provides a lithium secondary battery including a first electrode; a second electrode; a separator provided between the first electrode and the second electrode; and an electrolyte, wherein one of the first electrode and the second electrode includes the negative electrode for a lithium secondary battery described above.

In the present specification, the first electrode may be a positive electrode and the second electrode may be a negative electrode, or the first electrode may be a negative electrode and the second electrode may be a positive electrode.

In the present specification, the positive electrode may include a positive electrode current collector layer and a positive electrode active material layer formed on the positive electrode current collector layer and including the positive electrode active material.

In the positive electrode, the positive electrode current collector layer is not particularly limited as long as it has conductivity without causing a chemical change in the battery. For example, stainless steel, aluminum, nickel, titanium, fired carbon, aluminum or stainless steel each surface-treated with carbon, nickel, titanium, silver, or the like, or the like may be used. In addition, the positive electrode current collector layer may typically have a thickness of 3 to 500 $\mu$m, and a surface of the positive electrode current collector layer may be formed with microscopic irregularities to enhance an adhesive force with the positive electrode active material. For example, the positive electrode current collector may be used in various forms such as a film, a sheet, a foil, a net, a porous body, a foamed body, and a non-woven fabric body.

The positive electrode active material may be a positive electrode active material that is typically used. Specifically, the positive electrode active material may be a layered compound such as a lithium cobalt oxide ($LiCoO_2$) and a lithium nickel oxide ($LiNiO_2$), or a compound substituted with one or more transition metals; a lithium iron oxide such as $LiFe_3O_4$; a lithium manganese oxide such as chemical formula $Li_{1+c1}Mn_{2-c1}O_4$ ($0 \leq c1 \leq 0.33$), $LiMnO_3$, $LiMn_2O_3$ and $LiMnO_2$; a lithium copper oxide ($Li_2CuO_2$); a vanadium oxide such as $LiV_3O_8$, $V_2O_5$ and $Cu_2V_2O_7$; a Ni-site type lithium nickel oxide represented by chemical formula $LiNi_{1-c2}M_{c2}O_2$ (where M is at least one selected from the group consisting of Co, Mn, Al, Cu, Fe, Mg, B, and Ga, and satisfies $0.01 \leq c2 \leq 0.3$); a lithium manganese composite oxide represented by chemical formula $LiMn_{2-c3}M_{c3}O_2$ (where M is at least one selected from the group consisting of Co, Ni, Fe, Cr, Zn and Ta, and satisfies $0.01 \leq c3 \leq 0.1$) or $Li_2Mn_3MO_8$ (where M is at least one selected from the group consisting of Fe, Co, Ni, Cu and Zn); $LiMn_2O_4$ in which a part of Li of the chemical formula is substituted with an alkaline earth metal ion, or the like, but is not limited thereto. The positive electrode may be Li metal.

The positive electrode active material layer may include a positive electrode conductive material and a positive electrode binder together with the positive electrode active material described above.

In this case, the positive electrode conductive material is used to impart conductivity to the electrode, and can be used without particular limitation as long as it does not cause a chemical change and has electronic conductivity in a battery to be configured. Specific examples may include graphite such as natural graphite and artificial graphite; a carbon-based material such as carbon black, acetylene black, Ketjen black, channel black, furnace black, lamp black, thermal black and carbon fiber; metal powders or metal fibers such as copper, nickel, aluminum and silver; a conductive whisker such as zinc oxide and potassium titanate; a conductive metal oxide such as titanium oxide; or a conductive polymer such as polyphenylene derivative, or the like, and any one thereof or a mixture of two or more thereof may be used.

In addition, the positive electrode binder serves to improve bonding between particles of the positive electrode active material and adhesive force between the positive electrode active material and the positive electrode current collector. Specific examples may include polyvinylidene fluoride (PVDF), vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, polytetrafluoroethylene, polyethylene, polypropylene, ethylene-propylene-diene polymer (EPDM), sulfonated-EPDM, styrene butadiene rubber (SBR), fluoro rubber, or various copolymers thereof, and the like, and any one thereof or a mixture of two or more thereof may be used.

The separator serves to separate the negative electrode and the positive electrode and to provide a movement path of lithium ions, in which any separator may be used as the separator without particular limitation as long as it is typically used in a secondary battery, and particularly, a separator having high moisture-retention ability for an electrolyte as well as a low resistance to the movement of electrolyte ions may be preferably used. Specifically, a porous polymer film, for example, a porous polymer film manufactured from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. In addition, a usual porous non-woven fabric, for example, a non-woven fabric formed of high melting point glass fibers, polyethylene terephthalate fibers, or the like may be used. Furthermore, a coated separator including a ceramic component or a polymer material may be used to secure heat resistance or mechanical strength, and the separator having a single layer or multilayer structure may be selectively used.

FIG. 2 is a view showing a stack structure of a lithium secondary battery according to an exemplary embodiment of the present specification. Specifically, a negative electrode 200 for a lithium secondary battery including a negative electrode active material layer 30 on one surface of a negative electrode current collector layer 40 can be seen, a positive electrode 300 for a lithium secondary battery including a positive electrode active material layer 70 on one surface of a positive electrode current collector layer 60 can be seen, and the negative electrode 200 for a lithium secondary battery and the positive electrode 300 for a lithium secondary battery are formed in a stack structure with a separator 55 interposed therebetween.

In this case, a part of the release layer transferred together during pre-lithiation may be removed depending on the electrolyte used, and accordingly, a small amount thereof is included on top of the negative electrode. Although the release layer is not shown in FIG. 2, the release layer may be interposed between the base material layer 10 and the lithium metal layer 20.

In an exemplary embodiment of the present specification, the electrolyte may be, but is not limited to, for example, an organic liquid electrolyte, an inorganic liquid electrolyte, a solid polymer electrolyte, a gel-type polymer electrolyte, a solid inorganic electrolyte, a molten-type inorganic electrolyte and the like that may be used in the manufacture of the lithium secondary battery.

Specifically, the electrolyte may include a non-aqueous organic solvent and a metal salt.

As the non-aqueous organic solvent, for example, an aprotic organic solvent such as N-methyl-2-pyrrolidinone, propylene carbonate, ethylene carbonate, butylene carbonate, dimethyl carbonate, diethyl carbonate, gamma-butyrolactone, 1,2-dimethoxy ethane, tetrahydrofuran, 2-methyltetrahydrofuran, dimethyl sulfoxide, 1,3-dioxolane, formamide, dimethylformamide, dioxolane, acetonitrile, nitromethane, methyl formate, methyl acetate, phosphoric acid triester, trimethoxy methane, dioxolane derivative, sulfolane, methyl sulfolane, 1,3-dimethyl-2-imidazolidinone, propylene carbonate derivative, tetrahydrofuran derivative, ether, methyl propionate, or ethyl propionate may be used.

In particular, among the carbonate-based organic solvents, ethylene carbonate and propylene carbonate, which are cyclic carbonates, are high-viscosity organic solvents and can be preferably used because they have high permittivity to dissociate a lithium salt well. When the cyclic carbonate is mixed with a linear carbonate with low viscosity and low permittivity, such as dimethyl carbonate and diethyl carbonate, in a suitable ratio and used, an electrolyte having high electric conductivity may be prepared, and therefore, such a combined use may be more preferable.

A lithium salt may be used as the metal salt, and the lithium salt is a material that is readily soluble in the non-aqueous electrolyte, in which, for example, one or more selected from the group consisting of $F^-$, $Cl^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$ may be used as an anion of the lithium salt.

One or more additives, for example, a haloalkylene carbonate-based compound such as difluoroethylene carbonate, pyridine, triethylphosphite, triethanolamine, cyclic ether, ethylenediamine, n-glyme, hexamethyl phosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte for the purpose of improving life characteristics of the battery, suppressing a decrease in battery capacity, improving discharge capacity of the battery, and the like, in addition to the above-described electrolyte components.

An exemplary embodiment of the present invention provides a battery module including the lithium secondary battery as a unit cell, and a battery pack including the same. Since the battery module and the battery pack include the secondary battery having high capacity, high-rate capability, and high cycle characteristics, the battery module and the battery pack may be used as a power source of a medium to large sized device selected from the group consisting of an electric vehicle, a hybrid electric vehicle, a plug-in hybrid electric vehicle, and a power storage system.

Mode for Invention

Hereinafter, preferred examples will be provided for better understanding of the present invention. It will be apparent to one skilled in the art that the examples are only provided to illustrate the present invention and various modifications and alterations are possible within the scope and technical spirit of the present invention. Such modifications and alterations naturally fall within the scope of claims included herein.

**Preparation Example. Preparation of Transfer Laminate**

**Preparation Example 1**

A film (manufacturer: I-ONE Film) in which a 1 $\mu$m-thick acrylic resin film as a release layer was coated on polyethylene terephthalate as a base material layer was prepared. Lithium metal was deposited on the release layer to form a lithium metal layer having a thickness described in Table 1 below by thermal evaporation, whereby a transfer laminate was prepared. In this case, EWK-060 available from ULVAC, Inc. was used as the deposition apparatus, and the deposition process was performed under conditions of the speed of 2.5 m/min, the temperature of the lithium supply unit of 500°C, and the temperature of the main roll of -25°C.

**Examples Surface Treatment of Transfer Laminate**

**Example 1**

Each transfer laminate (Li Film, Li thickness 3 $\mu$m) prepared as described above was placed in a chamber, which was then put into a vacuum state of $10^{-3}$ torr or lower. Then, a vacuum valve was closed, and a gas purge valve was opened to introduce argon (gas) and carbon dioxide (gas) into the chamber at a ratio of 8:2 at the room temperature.
Each gas was purged until the vacuum level in the chamber reached a normal pressure, and after treatment for 30 minutes, the surface color difference of the lithium metal layer (film) was analyzed using CM-2600d.
The surface-treated transfer laminate (Li Film) was attached to both surfaces of the silicon negative electrode, and then lithium was transferred to the electrode part with a load of about 200 kgf by using rolling equipment.

**Example 2**

The same procedure as in Example 1 was carried out, except that the Li thickness of the transfer laminate used (thickness of the lithium metal layer) was set to 4 $\mu$m.

**Example 3**

The same procedure as in Example 1 was carried out, except that the Li thickness of the transfer laminate used was set to 5 $\mu$m.

**Example 4**

The same procedure as in Example 1 was carried out, except that the Li thickness of the transfer laminate used was set to 6 $\mu$m.

**Example 5**

Each transfer laminate (Li Film, Li thickness 6 $\mu$m) prepared as described above was placed in a chamber, which was then put into a vacuum state of $10^{-3}$ torr or lower. Then, a vacuum valve was closed, and a gas purge valve was opened to introduce argon (gas) and carbon dioxide (gas) into the chamber at a ratio of 8:2 at the room temperature.
Each gas was purged until the vacuum level in the chamber reached a normal pressure, and then the temperature in the chamber was maintained at 60°C. After gas treatment for 5 hours, the surface color difference of the lithium metal layer was analyzed using CM-2600d.
The surface-treated transfer laminate (Li Film) was attached to both surfaces of the silicon negative electrode, and then lithium was transferred to the electrode part with a load of about 200 kgf by using rolling equipment.

### Example 6

The same procedure as in Example 5 was carried out, except that gas treatment was performed for about 24 hours.

### Example 7

The same procedure as in Example 5 was carried out, except that gas treatment was performed for about 12 hours.

### Example 8

The same procedure as in Example 1 was carried out, except that the Li thickness of the transfer laminate used was set to 9 $\mu$m.

### Comparative Example 1

The surface color difference of the lithium metal layer was analyzed for the transfer laminate (Li thickness: 6 $\mu$m) produced in Preparation Example 1 using CM-2600d without additional gas purging.
The surface-treated transfer laminate (Li Film - lithium metal layer) was attached to both surfaces of the silicon negative electrode, and then lithium was transferred to the electrode part with a load of about 200 kgf using rolling equipment. In this case, the electrode used for transfer was 5 cm $\times$ 5 cm in size.

### Comparative Example 2

Each transfer laminate (Li Film, Li thickness 6 $\mu$m) prepared as described above was placed in a chamber, which was then put into a vacuum state of $10^{-3}$ torr or lower. Then, a vacuum valve was closed, a gas purge valve was opened to purge each gas at 25°C with CDA (Cleaned Dry Air, dew point -40°C) until the vacuum level in the chamber reached a normal pressure, and then the temperature in the chamber was maintained at 25°C. After gas treatment for 30 minutes, the surface color difference of the lithium metal layer was analyzed using CM-2600d.
The surface-treated transfer laminate (Li Film - lithium metal layer) was attached to both surfaces of the silicon negative electrode, and then lithium was transferred to the electrode part with a load of about 200 kgf using rolling equipment. In this case, the electrode used for transfer was 5 cm $\times$ 5 cm in size.

### Comparative Example 3

Each transfer laminate (Li Film, Li thickness 6 $\mu$m) prepared as described above was placed in a chamber, which was then put into a vacuum state of $10^{-3}$ torr or lower. Then, a vacuum valve was closed, and a gas purge valve was opened to introduce argon (gas) and carbon dioxide (gas) into the chamber at a ratio of 99:1 at 25°C.
Each gas was purged until the vacuum level in the chamber reached a normal pressure, and then the temperature in the chamber was maintained at 25°C. After gas treatment for 30 minutes, the surface color difference of the lithium metal layer was analyzed using CM-2600d.
The surface-treated transfer laminate (Li Film) was attached to both surfaces of the silicon negative electrode, and then lithium was transferred to the electrode part with a load of about 200 kgf using rolling equipment. In this case, the electrode used for transfer was 5 cm $\times$ 5 cm in size.

### Comparative Example 4

Each transfer laminate (Li Film, Li thickness 6 $\mu$m) prepared as described above was placed in a chamber, which was then put into a vacuum state of $10^{-3}$ torr or lower. Then, a vacuum valve was closed, and a gas purge valve was opened to introduce argon (gas) and carbon dioxide (gas) into the chamber at a ratio of 8:2 at 25°C.
Each gas was purged until the vacuum level in the chamber reached a normal pressure, and then the temperature in the chamber was maintained at 10°C. After gas treatment for 30 minutes, the surface color difference of the lithium metal layer was analyzed using CM-2600d.
The surface-treated transfer laminate (Li Film) was attached to both surfaces of the silicon negative electrode, and then lithium was transferred to the electrode part with a load of about 200 kgf using rolling equipment. In this case, the electrode used for transfer was 5 cm $\times$ 5 cm in size.

**Comparative Example 5**

Each transfer laminate (Li Film, Li thickness 6 $\mu$m) prepared as described above was placed in a chamber, which was then put into a vacuum state of $10^{-3}$ torr or lower. Then, a vacuum valve was closed, and a gas purge valve was opened to introduce argon (gas) and carbon dioxide (gas) into the chamber at a ratio of 8:2 at 25°C.

Each gas was purged until the vacuum level in the chamber reached a normal pressure, and then the temperature in the chamber was maintained at 25°C. After gas treatment for 3 minutes, the surface color difference of the lithium metal layer was analyzed using CM-2600d.

The surface-treated transfer laminate (Li Film) was attached to both surfaces of the silicon negative electrode, and then lithium was transferred to the electrode part with a load of about 200 kgf using rolling equipment. In this case, the electrode used for transfer was 5 cm $\times$ 5 cm in size.

[Measurement of Heat Generation Temperature]

The heat generation temperatures of the electrodes of Examples 1 to 8 and Comparative Examples 1 to 5 were measured in the following manner. Immediately after transferring Li to the electrode part, PET was removed, and a TC (thermocouple) was attached to the center of the surface of the electrode where Li was transferred to measure the maximum temperature value of the electrode surface from which heat was generated.

The results of Examples 1 to 8 and Comparative Examples 1 to 5 are shown in Table 1 below.

[Table 1]

| No. | Surface treatment (gas type, treatment temperature and time) _Thickness of lithium metal layer | SCI mode | | | SCE mode | | | Heat generation temperature immediately after transfer (°C) |
|---|---|---|---|---|---|---|---|---|
| | | L* | a* | b* | L* | a* | b* | |
| Comparative Example 1 | unprocessed 6 $\mu$m | 94.65 | 4.55 | 6.42 | 15.80 | 17.85 | 26.95 | 60 |
| Comparative Example 2 | CDA (room temperature, 30 minutes) 6 $\mu$m | 94.12 | 3.85 | 6.99 | 19.84 | 14.17 | 30.81 | 50 |
| Comparative Example 3 | Ar:$CO_2$=99:1 (25°C, 30 minutes) _6 $\mu$m | 93.95 | 3.75 | 7.07 | 20.73 | 12.51 | 30.55 | 50 |
| Comparative Example 4 | Ar:$CO_2$=8:2 (10°C, 30 minutes) _6 $\mu$m | 94.25 | -0.23 | 9.96 | 28.35 | 2.82 | 21.28 | 38 |
| Comparative Example 5 | Ar:$CO_2$=8:2 (25°C, 3 minutes) _6 $\mu$m | 94.15 | -0.47 | 9.22 | 32.19 | 0.26 | 5.17 | 42 |
| Example 1 | Ar:$CO_2$=8:2 (25°C, 30 minutes) _3 $\mu$m | 95.01 | -0.34 | 10.20 | 42.51 | 0.27 | 6.73 | 24 |
| Example 2 | Ar : $CO_2$=8 : 2 (25°C, 30 minutes) 4 $\mu$m | 93.77 | 0.45 | 10.80 | 43.92 | -0.56 | 2.62 | 24 |
| Example 3 | Ar:$CO_2$=8:2 (25°C, 30 minutes) 5 $\mu$m | 92.46 | 1.38 | 12.68 | 45.64 | 0.27 | 3.77 | 28 |

(continued)

| No. | Surface treatment (gas type, treatment temperature and time) _Thickness of lithium metal layer | SCI mode | | | SCE mode | | | Heat generation temperature immediately after transfer (°C) |
|---|---|---|---|---|---|---|---|---|
| | | L* | a* | b* | L* | a* | b* | |
| Example 4 | Ar:$CO_2$=8:2 (25°C, 30 minutes) _6 $\mu$m | 91.85 | 0.95 | 12.48 | 42.24 | 0.58 | 4.71 | 28 |
| Example 5 | Ar:$CO_2$=8:2 (60°C, 5 hrs) _6 $\mu$m | 91.98 | 0.92 | 9.65 | 62.81 | -0.39 | 0.40 | 24 |
| Example 6 | Ar:$CO_2$=8:2 (60°C, 24 hrs) _6 $\mu$m | 90.99 | 1.15 | 10.00 | 82.80 | 0.41 | 7.88 | 24 |
| Example 7 | Ar:$CO_2$=8:2 (60°C, 12 hrs) _6 $\mu$m | 94.32 | 0.04 | 8.17 | 70.89 | -1.14 | 3.46 | 24 |
| Example 8 | Ar:$CO_2$=8:2 (25°C, 30 minutes) _9 $\mu$m | 93.02 | 0.36 | 11.75 | 51.70 | -0.72 | 2. 64 | 30 |

In Table 1 above, CDA refers to the same as the components of general air.

According to Table 1, in the case of Comparative Examples 1 to 5, it can be confirmed that the even when the brightness (L) measured in the SCI mode was 90 or higher, the brightness (L) measured in the SCE mode was less than 40, and accordingly, the heat generation temperature immediately after transfer was 38°C or higher.

On the other hand, in the case of Examples 1 to 8, it can be confirmed that the brightness (L) measured in the SCI mode was 90 or higher, the brightness (L) measured in the SCE mode was 40 or higher, and accordingly, the heat generation temperature immediately after transfer was 30°C or lower.

In particular, as in the case of Comparative Examples 2 and 3, when the content of carbon dioxide in the surface treatment gas (a trace amount of carbon dioxide was present in CDA or Ar:$CO_2$ = 99:1) was changed, as in Comparative Example 4, when the temperature in the chamber was lowered to 10°C after purging the surface treatment gas, or as in Comparative Example 5, when the surface treatment time was set as short as 3 minutes, the brightness measured in the SCE mode was all less than 40. According to these results, in the Examples group compared to the Comparative examples group, even when the surface treatment conditions are changed, it is possible to easily predict whether lithium carbonate ($Li_2CO_3$) is formed in a short period of time, allowing the degree of surface treatment to be figured out precisely. Accordingly, the heat generation temperature immediately after transfer can be easily predicted, greatly reducing the risk of ignition during pre-lithiation.

**Claims**

1. A transfer laminate comprising:

   a base material layer; and
   a lithium metal layer on one surface of the base material layer,
   wherein the lithium metal layer comprises a surface protection film on a surface of the lithium metal layer,
   wherein the surface protection film comprises lithium carbonate ($Li_2CO_3$), and
   wherein a surface color difference with respect to the surface of the lithium metal layer comprising the surface protection film satisfies following formula (1):

$$L_{SCE} \geq 40 \; - \; \text{Formula (1)}$$

in Formula (1) above, $L_{SCE}$ refers to a brightness index measured in a specular component excluded (SCE) mode.

2. The transfer laminate of claim 1, wherein the surface color difference with respect to the surface of the lithium metal layer comprising the surface protection film satisfies following formula (2):

$$L_{SCI} \geq 90 \; - \; \text{Formula (2)}$$

in Formula (2) above, $L_{SCI}$ refers to a brightness index measured in a specular component included (SCI) mode.

3. The transfer laminate of claim 1, wherein one or more components selected from LiOH, $Li_3N$, $Li_2O$, $Li_2O_2$ and a combination thereof are further included on the surface of the lithium metal layer.

4. The transfer laminate of claim 1, wherein the base material layer has a thickness of 5 $\mu$m or greater and 300 $\mu$m or less.

5. The transfer laminate of claim 1, wherein the base material layer is one or more selected from the group consisting of polyethylene terephthalate (PET), polyethylenenaphtalate (PEN), polyimide (PI), poly(methylmethacrylate) (PMMA), polypropylene, polyethylene, and polycarbonate.

6. The transfer laminate of claim 1, wherein the lithium metal layer has a thickness of 1 $\mu$m or greater and 10 $\mu$m or less.

7. The transfer laminate of claim 1, further comprising a release layer between the base material layer and the lithium metal layer.

8. The transfer laminate of claim 7, wherein the release layer has a thickness of 0.1 $\mu$m or greater and 10 $\mu$m or less.

9. A method for manufacturing a negative electrode for a lithium secondary battery, the method comprising:

preparing a negative electrode for a lithium secondary battery by forming a negative electrode current collector layer and a negative electrode active material layer on one surface or both surfaces of the negative electrode current collector layer; and
transferring a lithium metal layer by laminating the transfer laminate of any one of claims 1 to 8 onto a surface of the negative electrode active material layer opposite to a surface in contact with the negative electrode current collector layer.

10. The method of claim 9, wherein the transferring the lithium metal layer by laminating the transfer laminate onto a surface of the negative electrode active material layer opposite to a surface in contact with the negative electrode current collector layer comprises:

laminating the transfer laminate such that a surface of the lithium metal layer opposite to a surface in contact with the base material layer comes into contact with a surface of the negative electrode active material layer opposite to a surface in contact with the negative electrode current collector layer, and
removing the base material layer.

11. The method of claim 9, wherein the laminating is performed with a load of 200 kgf.

12. The method of claim 9, further comprising pre-lithiating the negative electrode active material layer after transferring the lithium metal layer,
wherein in the pre-lithiating the negative electrode active material layer, the negative electrode active material layer is pre-lithiated within 30 minutes to 48 hours after transferring lithium metal.

13. A negative electrode for a lithium secondary battery manufactured by the method for manufacturing a negative electrode for a lithium secondary battery of claim 9.

14. A lithium secondary battery comprising:

EP 4 542 668 A1

a first electrode;
a second electrode;
a separator provided between the first electrode and the second electrode; and
an electrolyte,
wherein one of the first electrode and the second electrode comprises the negative electrode for a lithium secondary battery of claim 13.

[Figure 1]

[Figure 2]

| INTERNATIONAL SEARCH REPORT | International application No. |
| | **PCT/KR2023/021383** |

**A. CLASSIFICATION OF SUBJECT MATTER**

**H01M 4/13**(2010.01)i; **H01M 4/04**(2006.01)i; **H01M 4/139**(2010.01)i; **H01M 10/0525**(2010.01)i; **H01M 4/02**(2006.01)i

According to International Patent Classification (IPC) or to both national classification and IPC

**B. FIELDS SEARCHED**

Minimum documentation searched (classification system followed by classification symbols)

H01M 4/13(2010.01); H01M 10/052(2010.01); H01M 10/0567(2010.01); H01M 4/134(2010.01); H01M 4/1395(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬 금속층(lithium metal layer), 표면보호막(surface protect layer), 리튬카보네이트(lithium carbonate), 명도(brightness), 색(color)

**C. DOCUMENTS CONSIDERED TO BE RELEVANT**

| Category* | Citation of document, with indication, where appropriate, of the relevant passages | Relevant to claim No. |
|---|---|---|
| A | KR 10-2021-0029459 A (LG CHEM, LTD.) 16 March 2021 (2021-03-16)<br>See claim 1; and paragraphs [0062] and [0081]. | 1-14 |
| A | KR 10-2020-0087437 A (LG CHEM, LTD.) 21 July 2020 (2020-07-21)<br>See entire document. | 1-14 |
| A | KR 10-2015-0145046 A (KOREA ADVANCED INSTITUTE OF SCIENCE AND TECHNOLOGY) 29 December 2015 (2015-12-29)<br>See entire document. | 1-14 |
| A | KR 10-2020-0000118 A (LG CHEM, LTD.) 02 January 2020 (2020-01-02)<br>See entire document. | 1-14 |
| A | KR 10-2022-0136277 A (KOREA RESEARCH INSTITUTE OF CHEMICAL TECHNOLOGY) 07 October 2022 (2022-10-07)<br>See entire document. | 1-14 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **12 April 2024** | **15 April 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

| International application No. |
| :--- |
| **PCT/KR2023/021383** |

| Patent document cited in search report | | | Publication date (day/month/year) | Patent family member(s) | | | Publication date (day/month/year) |
| :--- | :--- | :--- | :--- | :--- | :--- | :--- | :--- |
| KR | 10-2021-0029459 | A | 16 March 2021 | CN | 113826237 | A | 21 December 2021 |
| | | | | EP | 3961764 | A1 | 02 March 2022 |
| | | | | US | 2022-0223847 | A1 | 14 July 2022 |
| | | | | WO | 2021-045431 | A1 | 11 March 2021 |
| KR | 10-2020-0087437 | A | 21 July 2020 | CN | 111868974 | A | 30 October 2020 |
| | | | | CN | 111868974 | B | 10 November 2023 |
| | | | | EP | 3764436 | A1 | 13 January 2021 |
| | | | | EP | 3764436 | B1 | 03 May 2023 |
| | | | | JP | 2021-517729 | A | 26 July 2021 |
| | | | | JP | 7248777 | B2 | 29 March 2023 |
| | | | | KR | 10-2415166 | B1 | 29 June 2022 |
| | | | | PL | 3764436 | T3 | 10 July 2023 |
| | | | | US | 2021-0020927 | A1 | 21 January 2021 |
| | | | | WO | 2020-145753 | A1 | 16 July 2020 |
| KR | 10-2015-0145046 | A | 29 December 2015 | KR | 10-1614885 | B1 | 22 April 2016 |
| KR | 10-2020-0000118 | A | 02 January 2020 | KR | 10-2448076 | B1 | 26 September 2022 |
| KR | 10-2022-0136277 | A | 07 October 2022 | WO | 2022-211521 | A1 | 06 October 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220182508

- JP 2009080971 A